# FASCICULE DE BREVET EUROPEEN

(11) **EP 3 638 538 B1**
(45) Date de publication et mention de la délivrance du brevet: **05.05.2021**
(21) Numéro de dépôt: 18735646.4
(22) Date de dépôt: 23.05.2018
(51) Int. Cl.: B60N 3/10, B60R 13/02, B60R 7/04, B60R 11/00

(54) **VEHICULE AUTOMOBILE EQUIPE D'UNE CONSOLE CENTRALE CONTENANT DES BOITIERS ELECTRONIQUES**
KRAFTFAHRZEUG MIT EINER ZENTRALEN KONSOLE MIT ELEKTRONISCHEN VERKAPSELUNGEN
MOTOR VEHICLE EQUIPPED WITH A CENTRAL CONSOLE CONTAINING ELECTRONIC PACKAGES

(30) Priorité: 14.06.2017 FR 1755325
(43) Date de publication de la demande: 22.04.2020
(73) Titulaire: PSA Automobiles SA, 78300 Poissy (FR)
(72) Inventeur: MITOUART, Jean Guy, 77310 Pringy (FR); FAGET, Sebastien, 95220 Herblay (FR)
(86) Numéro de dépôt international: PCT/FR2018/051227
(87) Numéro de publication internationale: WO 2018/229377

(56) Documents cités:
- JP-A- 2004 314 667
- US-A1- 2007 278 829
- US-A1- 2011 095 555

## Description

La présente invention concerne un véhicule automobile équipé d'une console centrale fixée sur le plancher contenant des boîtiers électroniques.

Les véhicules automobiles comportent généralement un plancher comprenant une tôle présentant entre les deux sièges avant un bossage longitudinal, formant en dessous un tunnel permettant de passer notamment un tube du système d'échappement.

Le tunnel est recouvert par une console centrale ajustée entre les deux sièges avant, qui réalise différentes fonctions.

Sur la plupart des véhicules un levier de commande d'une boîte de vitesses manuelle ou d'une transmission automatique, comporte une embase fixée sur le tunnel, et une tige passant au travers de la console, présentant à son extrémité supérieure un pommeau de manœuvre.

Certaines consoles centrales comportent des alvéoles permettant de recevoir des gobelets ou des canettes maintenus debout, pour éviter qu'ils ne basculent et ne se vident. Dans ce cas on prévoit généralement des perçages à la base des alvéoles, permettant l'écoulement d'un liquide en cas de versement accidentel dans les alvéoles.

Le volume sous la console centrale est généralement utilisé pour passer des faisceaux de fils électriques reliant l'avant et l'arrière du véhicule. Les faisceaux de fils sont fixés à la carrosserie par des dispositifs d'accrochage, afin d'assurer un positionnement suffisamment précis évitant des contacts avec d'autres éléments pouvant entraîner des usures et des défaillances, et d'éviter des vibrations et des bruits.

En particulier il est connu de fixer les faisceaux de fils sur l'embase du levier de commande de la transmission. Toutefois dans certains cas le levier de commande comporte une commande électrique présentant une embase compacte, qui n'est pas assez large pour venir à proximité du faisceau, et permettre son accrochage dessus. Il faut alors prévoir un support particulier pour recevoir les faisceaux et les fixer dessus.

Par ailleurs on peut disposer sur le tunnel des boîtiers électroniques, en particulier un boîtier électronique de commande de coussins gonflables de sécurité, appelés « airbags » en langue anglaise, disposés sous les perçages à la base des alvéoles de la console, prévus pour l'écoulement de liquides.

Un exemple de ces consoles centrales comportant des alvéoles est connu du document de brevet US-A1-2011095555.

Dans ce cas il faut prévoir une protection spécifique de ces boîtiers électroniques, en particulier un film plastique souple les couvrant, afin d'éviter un écoulement de liquide qui pourrait endommager les connexions ou pénétrer à l'intérieur. Le film plastique peut être autocollant pour faciliter la pose.

Les différents éléments pour assurer d'une part l'accrochage des faisceaux de fils électriques, et d'autre part la protection des boîtiers électroniques, nécessitent plusieurs composants représentant des coûts de fabrication, de gestion et de montage. De plus le positionnement d'un film plastique souple ne comprenant pas de forme précise, peut être délicat à réaliser avec une faible répétabilité qui peut entraîner des défauts.

La présente invention a notamment pour but d'éviter ces problèmes de l'art antérieur.

Elle propose à cet effet un véhicule automobile comportant une console centrale fixée sur un plancher de l'habitacle, équipée d'alvéoles de rangement de contenants de boissons présentant à la base des perçages d'évacuation de liquide, comportant des boîtiers électroniques disposés dans la console sous les perçages d'évacuation, et comportant une platine présentant une face principale fixée sur le plancher supportant des faisceaux de fils électriques, ce véhicule étant remarquable en ce que la face principale de la platine comporte sur le dessus des dispositifs d'accrochage des faisceaux de fils électriques, et comporte sur un côté un prolongement formant un capot recouvrant les boîtiers électroniques.

Un avantage de ce véhicule est qu'avec la platine formant une unique pièce rigide, facile et rapide à poser dans une position définie, on constitue à la fois un support recevant les faisceaux de fils électriques maintenus dans des positions précises avec les dispositifs d'accrochage judicieusement espacés, et une protection des boîtiers électroniques par le capot mis en place en même temps pour les protéger d'écoulements de liquides par les perçages d'évacuation, qui est positionné de manière précise afin d'assurer une protection efficace.

Le véhicule selon l'invention peut comporter de plus une ou plusieurs des caractéristiques suivantes, qui peuvent être combinées entre elles.

Avantageusement, la face principale comporte des moyens de fixation sur le plancher présentant des bossages venant en dessous de cette face principale, comprenant un creux intérieur ouvert sur le dessus, se terminant vers le bas par une face d'appui présentant un perçage.

En particulier la face principale peut présenter une forme sensiblement rectangulaire, comportant un moyen de fixation disposé à chaque angle.

Avantageusement, la face principale comporte au moins cinq dispositifs d'accrochage.

Selon un mode de réalisation, le capot forme un plan surélevé par rapport à la face principale.

Dans ce cas, avantageusement un bord de la face principale comporte un rebord tourné vers le haut recevant en partie supérieure le capot, et des équerres de renforcement sont disposées sur les côtés de ce rebord.

En particulier, la platine peut être fixée sur un tunnel formé par le plancher, à côté d'un levier de commande d'une transmission du véhicule.

Dans ce cas, le capot peut être disposé à l'arrière de la face principale de la platine.

La transmission peut être une boîte de vitesses automatique.

En particulier, les boîtiers électroniques peuvent comporter un boîtier électronique de commande d'airbags.

L'invention sera mieux comprise et d'autres caractéristiques et avantages apparaîtront plus clairement à la lecture de la description ci-après donnée à titre d'exemple en référence aux dessins annexés dans lesquels :
- la figure 1 est une vue de côté de l'intérieur d'une console centrale posée sur un tunnel d'un véhicule automobile selon l'art antérieur, comportant une platine de support de faisceaux de fils électriques ;
- les figures 2 et 3 sont respectivement des vues de dessus et de dessous d'une platine d'un véhicule automobile selon l'invention ; et
- la figure 4 est une vue de côté de l'intérieur d'une console centrale d'un véhicule selon l'invention, comportant cette platine.

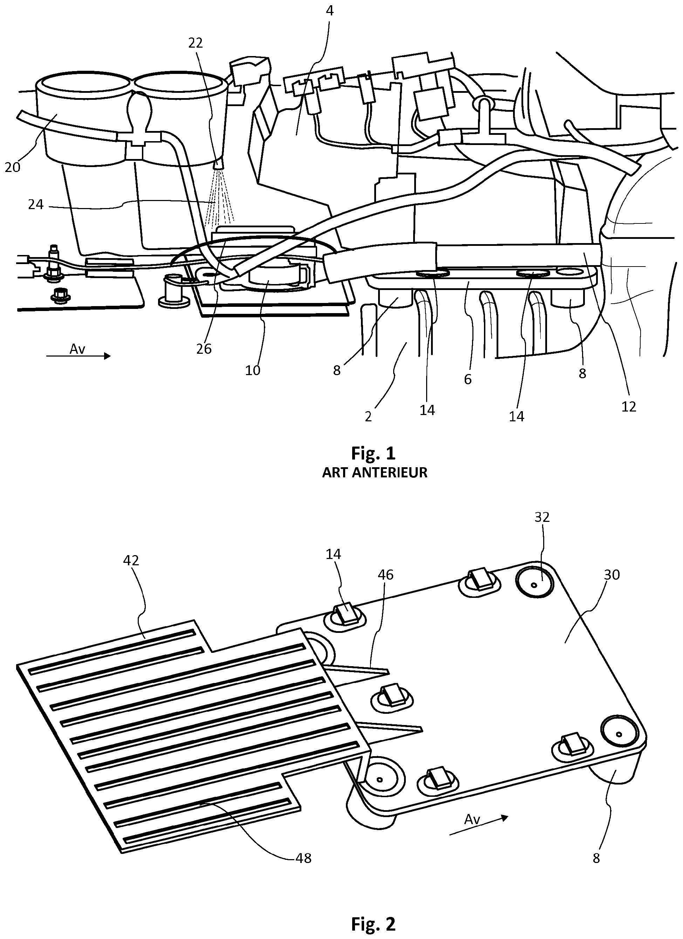

La figure 1 présente une embase 4 d'un levier de commande d'une boîte de vitesses manuelle, fixée sur un tunnel 2 formé par un bossage longitudinal sur le plancher de la caisse d'un véhicule automobile, présentant un côté avant indiqué par la flèche « AV ».

L'embase 4 formée par le moulage d'une matière plastique, présente du côté droit un flanc sensiblement vertical, se terminant en bas par un rebord horizontal plan formant une platine 6.

La platine 6 comporte à l'avant et à l'arrière, un bossage cylindrique creux 8 s'étendant en dessous du plan, présentant un perçage central recevant une vis de fixation sur le tunnel 2.

La platine comporte sur le dessus deux dispositifs d'accrochage 14 espacés, recevant un faisceau électrique 12 allongé suivant l'axe du véhicule, dont l'extrémité arrière est fixée sur un boîtier électronique 10 de commande des airbags de protection des passagers, disposé un peu en arrière de cette platine.

Une console centrale recouvrant le tunnel 2 entre les sièges avant du véhicule, comporte en arrière du boîtier électronique 10 des alvéoles 20 présentant chacune une forme circulaire, destinées à recevoir des gobelets ou des canettes pour les maintenir debout.

Un perçage 22 est formé à la base des alvéoles 20, vers l'avant, de manière à permettre un écoulement 24 d'un liquide en cas de renversement accidentel de ce liquide dans les alvéoles.

Un film plastique autocollant 26 est fixé sur le boîtier électronique 10, afin de le couvrir pour le protéger d'un écoulement 24 venant du perçage 22 disposé sensiblement au-dessus de ce boîtier.

La mise en place de ce film plastique autocollant souple est délicate car il ne comporte pas de forme rigide permettant de le positionner avec précision. De plus en cas de dépose et de repose, la colle disponible dessus ne permet plus un maintien efficace.

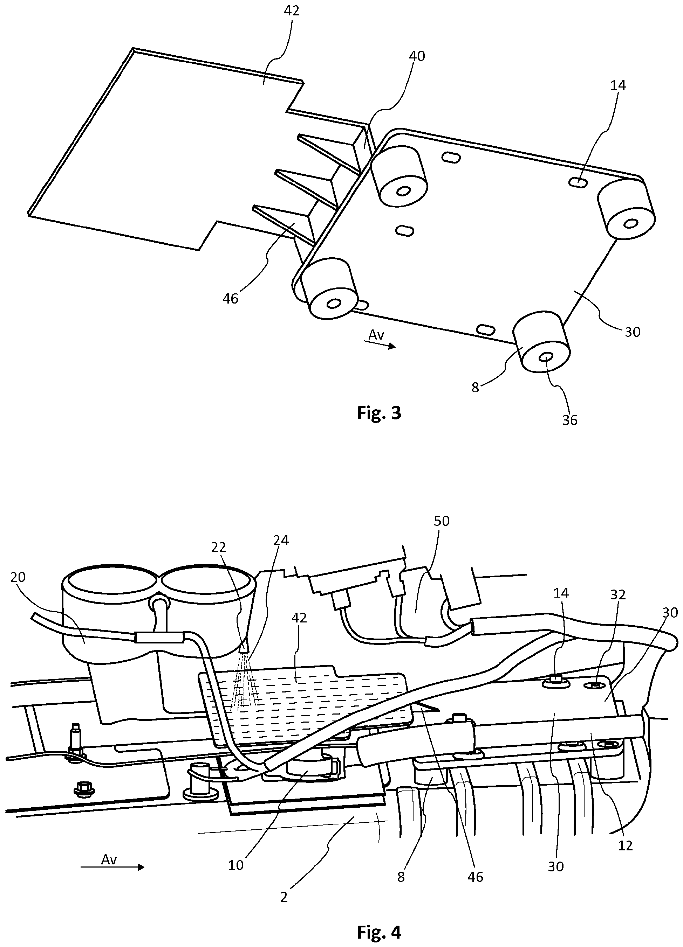

Les figures 2 et 3 présente une platine symétrique par rapport à un axe longitudinal, comportant vers l'avant une face principale plane 30 de forme rectangulaire, comprenant un grand côté disposé dans la direction longitudinale du véhicule.

Chaque angle de la face principale 30 comporte en dessous de cette face, un bossage cylindrique vertical 8 se terminant par une face d'appui transversale présentant un perçage central 36, prévue pour venir en appui sur le dessus du tunnel 2 du véhicule, en surélevant légèrement cette face principale.

Le creux intérieur 32 de chaque bossage cylindrique 8 reçoit une vis de fixation introduite dans le perçage 36, venant dans des perçages de la tôle du tunnel 2 pour fixer la platine dessus.

La face principale 30 comporte vers l'arrière trois dispositifs d'accrochage 14 alignés transversalement, et vers l'avant deux dispositifs d'accrochage disposés sur les côtés, prévus pour fixer des faisceaux de fils électriques. En particulier les cinq dispositifs d'accrochage 14 permettent de recevoir de manière modulaire différents types de faisceaux, correspondant à des variantes de véhicule réalisées sur une même plate-forme.

Le côté arrière de la face principale 30 comporte un rebord vertical 40 de petite hauteur, dont le dessus se prolonge vers l'arrière par un plateau formant un capot 42 présentant une longueur sensiblement égale à celle de cette face principale.

Le capot 42 comporte une partie avant plus étroite correspondant à la largeur du rebord vertical 40, formant de chaque côté une échancrure. Trois équerres inférieures de renforcement 44 relient le dessous du capot 42 avec la face arrière du rebord vertical 40. Deux équerres supérieures de renforcement 46 relient le dessus de la face principale 30 avec la face avant du rebord vertical 40.

Le capot 42 comporte sur le dessus des rainures longitudinales 48 qui aux extrémités ne débouchent pas.

La platine est formée de manière économique par un moulage d'une matière plastique, permettant de réaliser en une seule opération le moulage de l'ensemble des formes.

La figure 4 présente une embase d'un levier de commande d'une boîte de vitesses automatique 50, comprenant un système électrique intérieur de commande beaucoup plus compact que le système mécanique de commande de l'embase pour une boîte de vitesses manuelle 4 présentée figure 1.

L'embase de boîte de vitesses automatique 50 dégage un espace assez large sur son côté droit, permettant le montage de la platine par des moyens de fixation sur le tunnel 2 prévus pour la fixation de l'embase de boîte de vitesses manuelle 4. De cette manière sur une même plate-forme de véhicule, sans modification des fixations, on peut disposer l'embase de commande d'une boîte de vitesses manuelle 4 comprenant un rebord intégré de support des faisceaux, ou l'embase de commande d'une boîte de vitesses automatique 50 en ajoutant sur le côté la platine.

De plus la grande surface de la face principale 30, comprenant les dispositifs d'accrochage 14 installés au préalable, permet de recevoir de manière modulaire différents faisceaux de fils électriques à partir d'une même platine.

Le capot 42 venant au-dessus du boîtier électronique 10, est automatiquement positionné de manière précise lors du montage de la platine, en couvrant de manière efficace ce boîtier pour le protéger.

## Revendications

1. Véhicule automobile comportant une console centrale fixée sur un plancher (2) de l'habitacle, équipée d'alvéoles (20) de rangement de contenants de boissons, présentant à la base des perçages d'évacuation de liquide (22), comportant des boîtiers électroniques (10) disposés dans la console sous les perçages d'évacuation (22), **caractérisé en ce que** les boîtiers électroniques comportent une platine présentant une face principale (30) fixée sur le plancher (2) supportant des faisceaux de fils électriques (12), et **en ce que** la face principale de la platine (30) comporte sur le dessus des dispositifs d'accrochage (14) des faisceaux de fils électriques (12), et comporte sur un côté un prolongement formant un capot (42) recouvrant les boîtiers électroniques (10).

2. Véhicule automobile selon la revendication 1, **caractérisé en ce que** la face principale (30) comporte des moyens de fixation (8) sur le plancher (2) présentant des bossages venant en dessous de cette face principale (30), comprenant un creux intérieur (32) ouvert sur le dessus, se terminant vers le bas par une face d'appui présentant un perçage (36).

3. Véhicule automobile selon la revendication 1 ou 2, **caractérisé en ce que** la face principale (30) présente une forme sensiblement rectangulaire, comportant un moyen de fixation (8) disposé à chaque angle.

4. Véhicule automobile selon l'une quelconque des revendications précédentes, **caractérisé en ce que** la face principale (30) comporte au moins cinq dispositifs d'accrochage (14).

5. Véhicule automobile selon l'une quelconque des revendications précédentes, **caractérisé en ce que** le capot (42) forme un plan surélevé par rapport à la face principale (30).

6. Véhicule automobile selon la revendication 5, **caractérisé en ce qu'**un bord de la face principale (30) comporte un rebord tourné vers le haut (40) recevant en partie supérieure le capot (42), et **en ce que** des équerres de renforcement (44, 46) sont disposées sur les côtés de ce rebord (40).

7. Véhicule automobile selon l'une quelconque des revendications précédentes, **caractérisé en ce que** la platine est fixée sur un tunnel formé par le plancher (2), à côté d'un levier de commande (50) d'une transmission du véhicule.

8. Véhicule automobile selon la revendication 7, **caractérisé en ce que** le capot (42) est disposé à l'arrière de la face principale (30) de la platine.

9. Véhicule automobile selon la revendication 7 ou 8, **caractérisé en ce que** la transmission (4) est une boîte de vitesses automatique.

10. Véhicule automobile selon l'une quelconque des revendications précédentes, caractérisé ce que les boîtiers électroniques (10) comportent un boîtier électronique de commande d'airbags.

## Patentansprüche

1. Kraftfahrzeug mit einer Mittelkonsole, die an einem Boden (2) des Fahrgastraums befestigt ist und mit Zellen (20) zur Aufbewahrung von Getränkebehältern ausgestattet ist und an der Basis Flüssigkeitsentleerungslöcher (22) aufweist, die elektronische Kästen (10) umfassen, die in der Konsole unter den Evakuierungslöchern (22), **dadurch gekennzeichnet, dass** die Elektronikboxen eine Platte mit einer am Boden (2) befestigten Hauptfläche (30) aufweisen, die Bündel elektrischer Drähte (12) trägt, und dass die Hauptfläche der Platte (30) umfasst auf der Oberseite der Hakenvorrichtungen (14) Bündel von elektrischen Drähten (12) und weist auf einer Seite eine Verlängerung auf, die eine Abdeckung (42) bildet, die die Elektronikboxen (10) abdeckt.

2. Kraftfahrzeug nach Anspruch 1, **dadurch gekennzeichnet, daß** die Hauptfläche (30) aufweist, Befestigungsmittel (8) auf dem Boden (2) mit Bossen unten kommend dieser Hauptfläche (30), die einen hohlen Innenraum aufweist, (32) offen ist die Oberseite endet unten mit einer Lagerfläche mit einer Bohrung (36).

3. Kraftfahrzeug nach Anspruch 1 oder 2, **dadurch gekennzeichnet, dass** die Hauptfläche (30) eine im wesentlichen rechteckige Form aufweist, die in jedem Winkel angeordnete Befestigungsmittel (8) umfasst.

4. Kraftfahrzeug nach einem der vorhergehenden Ansprüche, **dadurch gekennzeichnet, dass** die Hauptfläche (30) mindestens fünf Hakenvorrichtungen (14) umfasst.

5. Kraftfahrzeug nach einem der vorhergehenden Ansprüche, **dadurch gekennzeichnet, dass** die Abdeckung (42) eine Ebene bildet, die relativ zur Hauptfläche (30) angehoben ist.

6. Kraftfahrzeug nach Anspruch 5, **dadurch gekennzeichnet, dass** ein Rand der Hauptfläche (30) einen nach oben gerichteten Rand (40), um den oberen Teil der Abdeckung (42) empfängt, und dass die Klammern Verstärkung (44, 46) sind an den Seiten dieses Flansches (40) angeordnet.

7. Kraftfahrzeug nach einem der vorhergehenden Ansprüche, **dadurch gekennzeichnet, dass** die Platte wird auf fest einem Tunnel durch den Boden (2) gebildet ist, neben einem Steuerhebel (50) von einem Fahrzeuggetriebe.

8. Kraftfahrzeug nach Anspruch 7, **dadurch gekennzeichnet, dass** die Abdeckung (42) an der Rückseite der Hauptfläche (30) angeordnet ist, die Platte.

9. Kraftfahrzeug nach Anspruch 7 oder 8, **dadurch gekennzeichnet, dass** das Getriebe (4) ein Automatikgetriebe ist.

10. Kraftfahrzeug nach einem der vorhergehenden Ansprüche, **dadurch gekennzeichnet, dass** die elektronischen Einheiten (10) eine elektronische Airbagsteuereinheit umfassen.

## Claims

1. Motor vehicle comprising a center console fixed to a floor (2) of the the passenger compartment, equipped with cells (20) for storing beverage containers, having at the base liquid evacuation holes (22), comprising electronic boxes (10) arranged in the console under the discharge holes (22), **characterized in that** the electronic boxes comprising a plate having a main face (30) fixed to the floor (2) supporting bundles of electrical wires (12), and **in that** the main face of the plate (30) comprises on the top of the hooking devices (14) bundles of electric wires (12), and has on one side an extension forming a cover (42) covering the electronic boxes (10).

2. Motor vehicle according to claim 1, **characterized in that** the main face (30) comprises fixing means (8) on the floor (2) having bosses coming below this main face (30), comprising a hollow interior (32) open at the top, ending downwards with a bearing face having a bore (36).

3. Motor vehicle according to claim 1 or 2, **characterized in that** the main face (30) has a substantially rectangular shape, comprising fixing means (8) arranged at each angle.

4. Motor vehicle according to any one of the preceding claims, **characterized in that** the main face (30) comprises at least five hooking devices (14).

5. Motor vehicle according to any one of the preceding claims, **characterized in that** the cover (42) forms a plane raised relative to the main face (30).

6. Motor vehicle according to claim 5, **characterized in that** an edge of the main face (30) has an upwardly facing rim (40) receiving the upper part of the cover (42), and **in that** the brackets reinforcement (44, 46) are arranged on the sides of this flange (40).

7. Motor vehicle according to any one of the preceding claims, **characterized in that** the plate is fixed to a tunnel formed by the floor (2), next to a control lever (50) of a vehicle transmission.

8. Motor vehicle according to claim 7, **characterized in that** the cover (42) is disposed at the rear of the main face (30) of the plate.

9. Motor vehicle according to claim 7 or 8, **characterized in that** the transmission (4) is an automatic gearbox.

10. Motor vehicle according to any one of the preceding claims, **characterized in that** the electronic units (10) comprise an electronic airbag control unit.
